# EUROPÄISCHE PATENTANMELDUNG

(11) **EP 2 163 859 A1**
(43) Veröffentlichungstag der Anmeldung: **17.03.2010**
(21) Anmeldenummer: 08164285.2
(22) Anmeldetag: 12.09.2008
(51) Int. Cl.: G01D 5/249

(54) **Verfahren und Vorrichtung zum Bestimmen von Positionen**

(71) Anmelder: Leica Geosystems AG, 9435 Heerbrugg (CH)
(72) Erfinder: Sprenger, Bernhard, CH-9443, Widnau (CH)
(74) Vertreter: Harmann, Bernd-Günther

(57) **Zusammenfassung**

Zum Bestimmen von Positionen eines Codes auf einem bewegbaren Träger ist relativ zu einem Sensorelement (S1,S2,S3,S4) mit mindestens einem Sensorarray der Träger (2) im Bereich des Sensorarrays in einer Bewegungsrichtung bewegbar. Das mindestens eine Sensorarray ermittelt die Lage von durch Strahlung unterscheidbar abgebildeten Code-Elementen im Bereich des Sensorelements (S1,S2,S3,S4), wobei die erfassten Werte in wenigstens einer Ausleserichtung ausgelesen werden und daraus Positionswerte bestimmt werden. Dabei wird das wenigstens eine Sensorarray zweimal mit gegensinnigen Ausleserichtungen ausgelesen oder es wird ein Sensorpaar aus zwei Sensorarrays mit jeweils einer arrayspezifischen Ausleserichtung relativ zur Bewegungsrichtung des Trägers paarweise gegensinnig ausgelesen. Aus den Lagen der unterscheidbar abgebildeten Code-Elemente werden Positionswerte abgeleitet und diese gemittelt, so dass eine Position mit erhöhter Genauigkeit bereit gestellt werden kann. Die Genauigkeit wird dabei mit einem nur geringen Aufwand klar erhöht.

## Beschreibung

Die Erfindung bezieht sich auf ein Verfahren zum Bestimmen von Positionen eines codetragenden relativ bewegbaren Trägers nach dem Oberbegriff des Anspruches 1, eine ebensolche Vorrichtung nach dem Oberbegriff des Anspruches 7 und zwei Sensorelemente zur Durchführung des Verfahrens nach dem Oberbegriff des Anspruchs 13 und 15.

Zum Bestimmen von Relativpositionen zwischen zwei Elementen werden in vielen Anwendungsbereichen ein Träger mit mindestens einer Strichcode-Spur und mindestens eine Sensoranordnung zum Erfassen von Code-Information, z.B. von Strichcodes, verwendet. Die erfasste Strichcode-Information ermöglicht die Bestimmung der Sensorposition relativ zum Code bzw. zum Codeträger, wobei grundsätzlich sowohl der Codeträger als auch der Sensor gegenüber den restlichen Komponenten als die bewegbare Einheit ausgestaltet werden können. Bei der Ermittlung von Linearpositionen werden linear verlaufende Codes bzw. Teilungen und diese teilweise überlappende Sensorarrays verwendet. Eine Winkelposition kann mit einer Kreisteilung und einem sich über einen Abschnitt der Kreisteilung erstreckenden Sensorarray, insbesondere einem CMOS-Array, erfasst werden.

Je nach Anwendungsbereich, Funktionsprinzip und zu realisierenden Genauigkeiten finden unterschiedliche Teilungen Verwendung. Beispielsweise kann eine Kreisteilung in absolut kodierte Intervalle aufgeteilt sein, wobei der Sensorarray die Intervallnummer abliest und daraus eine grobe Winkelbestimmung ableitet. Um einen exakten Winkelwert zu erhalten, wird aus den Intensitätswerten des Sensorarrays die Position einer Intervallmarke relativ zum Sensorarray ermittelt.

Die Schriften EP 0 085 951 B1, US 4 668 862 A1 und DE 199 39 643 beschreiben verschiedene Lösungen zur Positionsbestimmung. Gemäss EP 0 085 951 B1 wird der Schwerpunkt der Intervallmarke ermittelt. US 4 668 862 A1 beschreibt zusätzlich die Bestimmung eines das jeweilige Intervall charakterisierenden Strichmusters. In DE 199 39 643 A1 wird die Position der Intervallmarke bestimmt, indem die Flankenpositionen von vielen Teilungs-Strichen erfasst und daraus ein einziger Feinwert ermittelt wird.

Aus der DE 35 28 955 A1 ist eine Winkelmessung für geodätische Geräte bekannt, bei der ein drehbarer Teilkreis sowohl eine absolut kodierte Teilung als auch eine Inkrementteilung umfasst. Die Winkelgrösse wird aus Ablesungen der beiden Teilungen mit zwei einander diametral gegenüberliegenden festen und mit zwei einander diametral gegenüberliegenden drehbaren Sensorsystemen ermittelt. Der Aufwand für die beiden Ablesungen ist gross und trotzdem können Ablesefehler auftreten.

Wenn das Zentrum der Kreisteilung nicht genau im Zentrum der Drehachse liegt, so treten Exzentrizitätsfehler auf, die beispielsweise gemäss verschiedener Ausführungsbeispiele der EP 1 632 754 A1 korrigiert werden können. Diese Lösung ist nur auf die Exzentrizität ausgerichtet und kann andere Fehler nicht minimieren.

EP 325 924 A1 und DE 199 07 326 A1 beschreiben eine Bestimmung der Winkelposition mit vier Abtast-Sensoren, wobei Exzentrizitätsfehler durch die Signalauswertung der vier Abtast-Sensoren reduziert werden.

Die Qualität einer Positionsbestimmung kann auch von der Übertragung der von den Abtast-Sensoren ermittelten Signale abhängen. DE 34 45 617 A1 beschreibt eine serielle Übertragung von Messwertdaten mit Übertragungsraten von 1,5 bis 2,0 MHz. Gerade mit hohen Übertragungsraten können abhängig von den verwendeten Sensorarrays auch Fehler auftreten.

Weil die Messgenauigkeit auch von der Lichtintensität abhängt, werden in US 7 291 831 B2 und US 7 291 831 B2 Lösungen beschrieben, bei denen die Helligkeit der Lichtquelle entsprechend einer Intensitätsmessung angepasst wird. US 6 483 104 B1 beschreibt die Verwendung von gepulstem Licht, um Probleme mit kurzen Scan-Zeiten und schwachem Licht zu überwinden. Für hohe Lichtintensitäten bei hohen Pulsraten müssen aufwendige Lichtquellen und Steuerungen eingesetzt werden.

Die Aufgabe besteht nun darin, eine verbesserte Lösung zu finden, mit der bei der Bestimmung von Linearpositionen oder Winkelpositionen mit Codes bzw. Teilungen möglichst viele Fehler vermieden werden können.

Eine weitere Aufgabe besteht darin, erhöhte Auslesegeschwindigkeiten in gattungsgemäßen Linear- oder Winkelencodern zu ermöglichen, insbesondere unter Verwendung eines einfachen Aufbaus.

Diese Aufgabe wird durch die Merkmale der Ansprüche 1, 7, 13 und 15 gelöst. Die abhängigen Ansprüche beschreiben alternative bzw. vorteilhafte Ausführungsvarianten.

In vielen gattungsgemäßen Anwendungen erfolgt eine exakte Ablesung des Codes nicht nur im unbewegten Zustand, sondern in einem Zustand, in dem der Codeträger und damit die Teilung gegenüber dem Detektor rotiert bzw. sich linear verschiebt. Im bewegten Zustand - also wenn der Träger mit dem Code in einer Bewegungsrichtung relativ zu den Sensorarrays bewegt wird - muss eine schnelle Messung durchgeführt werden können. Entsprechend muss ein sich zumindest über einen Teil eines Codes bzw. einer Teilung erstreckender Sensorarray die Abbildung eines Codeausschnittes auf den Sensorarray sehr schnell erfassen. Auch die Bearbeitung der erfassten Werte und das Bestimmen einer Positionsinformation sollen möglichst schnell durchgeführt werden. Hohe Relativgeschwindigkeiten bedingen somit zumeist entsprechend angepaßte Auslesegeschwindigkeiten, d.h. hohe Taktraten des Detektors.

Unterscheidbare Code-Elemente führen bei der Abbildung auf die Elemente des Sensorarrays zu Intensitätsverteilungen, die oft seriell in einer Ausleserichtung ausgelesen werden. Die Ausleserichtung umfasst eine genügend grosse Komponente entlang der Bewegungsrichtung des Trägers mit dem Code. Die Bewegungsrichtung des Trägers ist bei linearen Positionssensoren eine lineare Richtung entlang welcher eine Vor- oder Rückwärtsbewegung möglich ist. Bei Anordnungen mit einem um einen Drehpunkt drehenden Träger, auf welchem der Code sich in Umfangsrichtung erstreckt, ist die Bewegungsrichtung die Umfangsrichtung, wobei eine Links- und eine Rechtsdrehung möglich sind.

In Winkel- und Linear-Encodern gemäss dem Stande der Technik werden ein, zwei oder mehr Sensoren mit einer Vielzahl von Pixeln bzw. Bildpunkten verwendet. So sind z.B. in Winkelencodern typischerweise zwei Liniensensoren in Winkelabständen von 180° Grad oder vier Liniensensoren in Winkelabständen von 90° angeordnet.

Der Erfindung liegt die Erkenntnis zugrunde, dass bei hohen Auslesefrequenzen bzw. Auslesegeschwindigkeiten Fehler dominieren können, die von verschiedenen Einflussgrössen - Nichtlinearitäten und -idealitäten der Sensorelemente, der Signalausgangsstufen und Signalverstärkung in Abhängigkeit der Auslesefrequenz, der Intensität der verwendeten Strahlung bzw. des verwendeten Lichtes und/oder von temperaturabhängigen Drifteffekten - abhängen. Ebenfalls erkannt wurde, dass es aber nicht notwendig ist, alle diese Störeinflüsse mit spezifischen Massnahmen zu reduzieren bzw. Komponenten zu verwenden, die für entsprechende Geschwindigkeiten oder Frequenzen ausgelegt sind. Erfindungsgemäss können somit auch mit wenig aufwendigen bzw. wenig komplexen Anordnungen auch Auslesegeschwindigkeiten realisiert werden, die jenseits der eigentlichen Betriebsparameter liegen.

Die Auslesegeschwindigkeit ist proportional zur Anzahl pro Zeiteinheit ausgelesener Pixel und entspricht somit der Auslesefrequenz. Da jedes Pixel eine feste Pixelausdehnung hat, kann die Auslesegeschwindigkeit als die pro Zeiteinheit in Ausleserichtung ausgelesene Sensorausdehnung verstanden werden, welche bis auf den Faktor der Pixelausdehnung der pro Zeiteinheit ausgelesenen Anzahl Pixel entspricht. An dieser Stelle wird auch von Auslesefrequenz gesprochen, da hierunter die Anzahl der Auslesevorgänge pro Zeiteinheit verstanden wird.

Die Ausgangsstufe der für Positionsbestimmungen verwendeten Sensorarrays weist Output-Charakteristiken auf, welche mit denen von MOSFET Transistoren vergleichbar sind und somit lineare und gesättigte Bereiche aufweisen, welche von der Betriebsspannung abhängen.

Die Sensorarrays erfassen das Hell-Dunkel-Muster des auf den Sensorarray abgebildeten Teils eines Codes vorzugsweise in der Form von Peaks, die in Ausleserichtung von einem Grundwert auf ein Maximum ansteigende und dann wieder absteigende Pixelwerte darstellen. Die Sensorarrays zeigen Tiefpass-Charakteristiken und/oder Nichtlinearitäten, welche zu einer Deformierung der ermittelten Peaks führen, wobei die Deformierung in der Form von abgewinkelten Peaks mit verschobenem Schwerpunkt von der Auslese-Taktfrequenz abhängt. Es wurde erkannt, dass die aus den erfassten Intensitätsverteilungen ermittelten Positionen der Peaks in Ausleserichtung verschoben sind, wobei die Verschiebung von der Ausrichtung der Ausleserichtung relativ zur Bewegungsrichtung des Trägers mit dem Code abhängt.

Wenn die Ausleserichtung eines Sensors hinsichtlich der Bewegungsrichtung eine gleichsinnige Charakteristik oder Richtung aufweist, bzw. wie eine Komponente der Bewegungsrichtung, so tritt eine Verschiebung in einer ersten Richtung auf. Wenn die Ausleserichtung eines Sensors entgegengesetzt zur Rotations- oder Bewegungsrichtung des Codeträgers gerichtet ist, bzw. wie eine Komponente der Bewegungsrichtung, so tritt eine Verschiebung in einer zweiten entgegen gesetzten Richtung auf. Die Verschiebung hängt also von der Orientierung der Ausleserichtung relativ zur Bewegungsrichtung ab. Da dieser Effekt bei handelsüblichen Komponenten bereits bei einer Auslese-Taktfrequenz von 1 MHz auftritt, treten bei höheren Auslesegeschwindigkeiten, z.B. wenn die Pixel mit Frequenzen von bis zu 12.5MHz ausgelesen werden, Artefakte auf. So ist bspw. das Sensorbild in Richtung der Sensor-Ausleserichtung verzerrt bzw. verschoben.

Wenn ausgehend von den verzerrten bzw. verschoben Peaks Linear- oder Winkelpositionen bestimmt werden, so führt dies zu Positionswerten, die etwas zu den realen Werten verschoben sind. Die Positions-Verschiebung hängt nicht nur von der relativen Richtung zwischen Ausleserichtung und Bewegungsrichtung sondern beispielsweise auch von der Auslesefrequenz, zumindest einem bei der Auswertung der Peaks verwendeten Schwellwert und/oder der beim Sensorarray verwendbaren Intensität der Strahlungs- bzw. Lichtquelle ab.

Zudem wurde erkannt, dass sich die Art der Anordnung der Sensoren bzw. ihre Ausleserichtung auf die möglichen Fehler auswirkt. Wenn die Sensoren bezüglich ihrer Ausleserichtung relativ zur Bewegungsrichtung des Codes bzw. seines Trägers gleichsinnig geschaltet sind, was bei den bekannten Lösungen der Fall ist, so treten beim Auslesen der Pixel schon ab einer mittleren Auslesefrequenz und vor allem oberhalb der eigentlich vorgesehenen Frequenz - aufgrund nichtlinearer Effekte durch Sättigung und/oder Bandbreitenbegrenzungen - asymmetrische Peaks von durch die Teilung durchtretenden Strahlungsabschnitten auf. Die vom Code auf den Sensorarrays erzeugten Peaks werden dabei nicht nur in den Flanken verändert, sondern aufgrund der Sättigungseffekte und Nichtlinearitäten auch abgeflacht, was zu einer Schwerpunktsverschiebung in Ausleserichtung führt.

Wenn die für die Positionsbestimmung verwendeten Sensorarrays alle relativ zur Bewegungsrichtung des Codes die gleiche Sensor-Ausleserichtung aufweisen, wird auch der aus den Positionen der Peaks verschiedener Sensorarrays ermittelte Positionswert etwas in Ausleserichtung versetzt sein. Der Fehler ist dabei abhängig von der Auslesefrequenz, der Auswertung mit einem Schwellwert, der Lichtintensität und kann zusätzlich durch temperaturabhängige Drifteffekte verstärkt werden.

Wenn nun ein Sensor zweimal mit unterschiedlichen Richtungen oder zwei Sensoren paarweise gegensinnig ausgelesen werden, so können gegensinnig identische Verschiebungen kompensiert werden.

Hierbei können auch mehrere Lineararrays als jeweils lineare Abfolgen von Bildpunkten so angeordnet und ausgelesen werden, dass eine zumindest stückweise gegensinnige Ausleserichtung resultiert. Vorteilhaft ist es hierbei, diese Lineararrays auf einem gemeinsamen Chip auszubilden und so seriell zu verschalten, dass ein gemeinsamer Auslesevorgang möglich ist, der die Bildpunkte der linearen Anordnungen in abwechselnder Richtung ausliest. Solche Sensoranordnungen können mit zwei, drei, vier oder mehr Lineararrays ausgebildet werden, wobei diese beispielsweise zur Erfassung ein- und desselben Abschnittes des Codes nebeneinander liegend, d.h. mit paralleler Ausrichtung ihrer Längsachsen, angeordnet sein können. Es ist aber auch eine Anordnung der Lineararrays in einer Linie möglich, d.h. mit einer gemeinsamen Längsachse. Hierbei können aber in Abhängigkeit von der Art der Verschiebung und des verwendeten Codes grundsätzlich auch beide Anordnungen miteinander kombiniert werden und eine matrixartige Anordnung der Lineararrays genutzt werden.

Die erfindungsgemässe Realisierung eines nicht fehlerbehafteten Zustands erlaubt zudem den Vergleich mit einem fehlerbehafteten Zustand, so dass hieraus Schlüsse auf die auftretenden Fehler bzw. deren Verhalten, z.B. in Zeit- oder Temperaturabhängigkeit, gezogen werden können. Dies bedeutet, dass mit dem Vergleich von gleichsinnig und gegensinnig ausgelesenen Sensorpaaren Fehler in Abhängigkeit mindestens eines Parameters wie beispielsweise der Auslesefrequenz, der Strahlungs- bzw. Lichtintensität und/oder der Temperatur ermittelt werden können. Bei der Bestimmung einer gemittelten Position aus den Positionen mindestens eines gegensinnig ausgelesenen Sensorpaares verschwindet der Fehler im Wesentlichen. Wenn nun das mindestens eine Sensorpaar auch noch gleichsinnig ausgelesen wird und die bestimmten Werte zu einem Positionswert gemittelt werden, so ergibt sich aus der Differenz der beiden Mittelwerte der Fehler aufgrund der aktuell vorliegenden Parameterwerte. Bei einem Sensorpaar kann eine Umschaltvorrichtung den Wechsel zwischen gleichsinniger und gegensinniger Auslesung ermöglichen. Um entsprechende Vergleiche zu ermöglichen, kann gewährleistet werden, dass sich die effektive Position zwischen den beiden Messungen nicht geändert hat.

CMOS-Arrays besitzen hierbei den Vorteil, dass diese sogar nondestruktiv ausgelesen werden können, d.h. das gleiche Bild kann von beiden Seiten her ausgelesen werden, so dass beide Informationen erhalten werden können.

Wenn nun für verschiedene Parameterwerte, wie z.B. der Auslesefrequenz oder der Lichtintensität oder der Temperatur, jeweils gemäss dem soeben beschriebenen Vorgehen Fehlerwerte bestimmt werden, so können Fehlerverläufe abhängig vom entsprechenden Parameter erfasst werden. Falls gegebenenfalls auf gegensinnig ausgelesene Sensoren verzichtet werden muss, kann auch bei lediglich einem Sensor oder bei gleichsinnig ausgelesenen Sensoren eine Fehlerkorrektur entsprechend den aktuellen Parametern vorgesehen werden. Diese Fehlerkorrektur kann im Sinne einer exakteren Kalibrierung für verschiedene Auslesefrequenzen und/oder für unterschiedliche Strahlungs- bzw. Lichtintensitäten und/oder für unterschiedliche Temperaturen verwendet werden.

Beim Ableiten von Positionen ausgehend von den Lagen der mit den Sensorarrays erfassten Peaks kann eine von der Intensität der bei den Sensorarrays eintreffenden Strahlungs- bzw. Lichtintensität abhängige Korrektur durchgeführt werden. Beispielsweise wird eine intensitätsabhängige Positionsdifferenz zur aus den Peaks abgeleiteten Position addiert. Die Information zur aktuellen maximalen Intensität bei den Sensoren kann aber auch zur Erfassung möglicher Verschmutzungen im Weg von der Strahlungs- bzw. Lichtquelle zu den Sensorarrays verwendet werden. Wenn die Verschmutzung zu gross ist, kann auf eine nötige Reinigung hingewiesen werden.

Die Sensorarrays sind vorzugsweise Diodenarrays oder CMOS-Arrays. Es versteht sich von selbst, dass alle flächigen und linienförmigen Sensoranordnungen mit einer Auslesung in einer Ausleserichtung eingesetzt werden können. Vorzugsweise handelt es sich bei den Sensoren um Linienarrays, welche die Positionen von Strichen des Codes erfassen. Gegebenenfalls werden aber auch zweidimensionale Sensorarrays Verwendung finden können.

Die Zeichnungen erläutern die Erfindung anhand von Darstellungen zum Stand der Technik und zu einem Ausführungsbeispiel. Dabei zeigen in schematischer Darstellung
Fig. 1 einen Winkelencoders mit einem Sensorpaar aus zwei gegenüberliegenden Sensorarrays,
Fig. 2 einen Code für den Winkelencoder aus Fig. 1 und dessen Abbildung auf das Sensorpaar,
Fig. 3a effektive Peaks, die ohne Fehler von einem idealen Sensorarray erfasst würden, wobei die Achse I die Intensität und die Achse pp die Pixelposition bezeichnet,
Fig. 3b von einem Sensorarray bei hoher Auslesegeschwindigkeit mit Fehlern ausgelesene Peaks, wobei die Achse I die Intensität und die Achse pp die Pixelposition bezeichnet,
Fig. 4 eine Anordnung gemäss dem Stande der Technik mit einen Träger mit Kreisteilung und vier gleichsinnig angeordneten Sensorarrays,
Fig. 5 die von den vier Sensorarrays der Fig. 2 bei hoher Auslesegeschwindigkeit ausgelesenen Peaks, wobei die Achse I die Intensität und die Achse pp die Pixelposition bezeichnet,
Fig. 6 eine Draufsicht auf einen Träger mit einer Kreisteilung und einer ersten Ausführungsform von vier paarweise gegensinnig angeordneten Sensorarrays,
Fig. 7 die von den vier Sensorarrays der Fig. 4 mit Fehlern ausgelesenen Peaks, wobei die Achse I die Intensität und die Achse pp die Pixelposition bezeichnet und
Fig. 8 eine Draufsicht auf einen Träger mit einer Kreisteilung und einer zweiten Ausführungsform von vier paarweise gegensinnig angeordneten Sensorarrays,
Fig. 9 einen erfindungsgemässen Linearencoder mit zwei Sensorarrays, auf welche die gleichen Codeelemente abgebildet werden.
Fig. 10 ein erstes Ausführungsbeispiel eines erfindungsgemässen Sensorelements mit zwei gegensinnig angeordneten Sensorarrays für die Rotationsencoder aus den Fig. 1, 4, 6, 8 und den Linearencoder aus Fig. 9,
Fig.11 ein zweites Ausführungsbeispiel eines erfindungsgemässen Sensorelements mit paralleler Anordnung der Sensorarrays,
Fig.12 ein drittes Ausführungsbeispiel eines erfindungsgemässen Sensorelements mit paralleler Anordnung der Sensorarrays,
Fig.13 ein viertes Ausführungsbeispiel eines erfindungsgemässen Sensorelements mit paralleler Anordnung der Sensorarrays,
Fig.14 ein fünftes Ausführungsbeispiel eines erfindungsgemässen Sensorelements mit einer gemeinsamen Längsachse der Sensorarrays,
Fig.15 ein sechstes Ausführungsbeispiel eines erfindungsgemässen Sensorelements mit einer gemeinsamen Längsachse der Sensorarrays,
Fig.16 ein siebtes Ausführungsbeispiel eines erfindungsgemässen Sensorelements mit einer gemeinsamen Längsachse der Sensorarrays,
Fig.17 ein achtes Ausführungsbeispiel eines erfindungsgemässen Sensorelements mit einer gemeinsamen Längsachse der Sensorarrays,
Fig.18 ein neuntes Ausführungsbeispiel eines erfindungsgemässen Sensorelements mit einer gemeinsamen Längsachse der Sensorarrays,
Fig.19 ein zehntes Ausführungsbeispiel eines erfindungsgemässen Sensorelements mit einer parallelen Längsachse der Sensorarrays und einem Multiplexer und
Fig.20 ein elftes Ausführungsbeispiel eines erfindungsgemässen Sensorelements mit einer gemeinsamen Längsachse der Sensorarrays und einem Multiplexer.

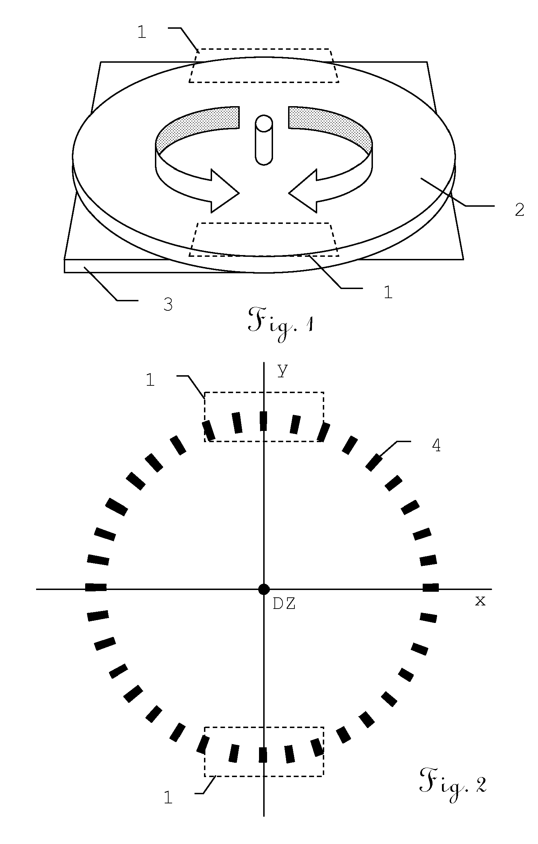

Fig. 1 zeigt die schematische Darstellung des strukturellen Aufbaus eines gattungsgemässen Winkelmessers bzw. eines Winkelencoders mit einem Sensorpaar aus zwei gegenüberliegenden Sensorarrays 1 und einem Drehkörper 2 mit einer Vielzahl um ein Musterzentrum angeordneter Musterelemente. Der scheibenförmige Drehkörper 2 ist gegenüber dem Trägerelement 3 mit den damit in Verbindung stehenden Sensorarrays 1 um eine Achse rotierbar angeordnet. Durch die Drehrichtung des Drehkörpers 2 wird eine Bewegungsrichtung gegenüber beiden Sensorarrays 1 definiert. Auf die mindestens zwei Sensorarrays 1 werden Code-Elemente durch Strahlung unterscheidbar abgebildet, so dass deren Lage im Bereich der Sensorarrays 1 ermittelbar ist. Zur Bestimmung einer aktuellen Drehlage des Drehkörpers 2 relativ zum Trägerelement bzw. zu den Sensorarrays 1 wird somit wenigstens ein Teil der Musterelemente auf die Sensorarrays 1 des Sensorpaares abgebildet. Hierbei werden die Positionen der abgebildeten Musterelemente aufgelöst und die Drehlage abgeleitet. Je nach Anzahl der verwendeten Sensoren können dabei durch Mittelbildung verschiedene periodische Fehlereinflüsse eliminiert werden, wie z.B. Exzentrizitätsfehler oder periodische Teilungsfehler.

Für jedes Sensorarray 1 werden die eine Lage der Code-Elemente repräsentierenden Werte in einer arrayspezifischen Ausleserichtung ausgelesen und aus diesen Werten nach einer Mittelung die Relativposition von Drehkörper 2 und Sensorarrays 1 bzw. Trägerelement 3 abgeleitet. Ein anderer erfindungsgemässer Ansatz besteht darin, ein Sensorarray 1 eines Sensorelementes für die Aufnahme der gleichen Musterelemente, d.h. in der gleichen Positionierung von Codeträger und Sensorarray, mit unterschiedlichen Ausleserichtungen zweimal auszulesen. Die Werte für beide Auslesevorgänge können dann ebenfalls gemittelt werden.

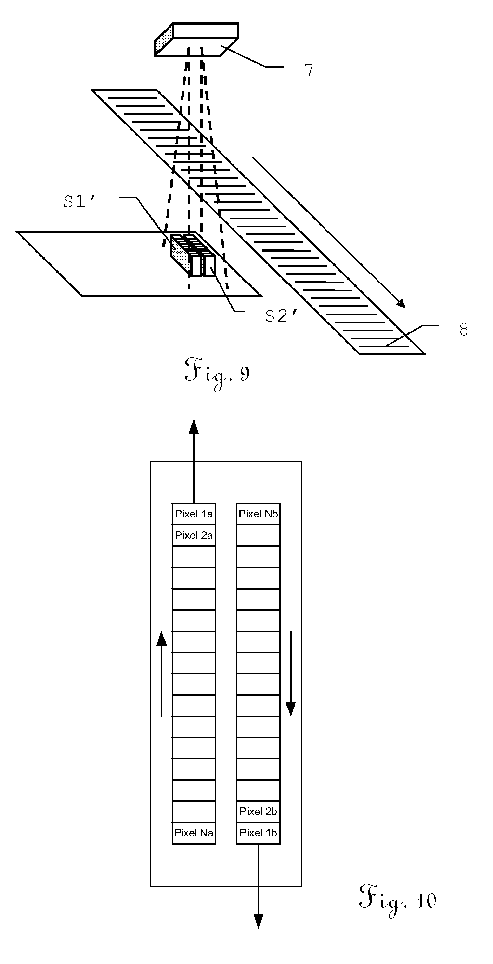

Der Begriff Mittelung umfasst dabei neben einer einfachen Durchschnittsbildung auch komplexere Aggregate, z.B. indem die Werte der Sensorarrays 1 mit Gewichtsfunktionen versehen werden, die beispielsweise auch zeit- oder temperaturabhängig variabel sein können. So können auch Drifteffekte der Sensoren berücksichtigt werden, insbesondere in Zusammenhang mit der ebenfalls erfindungsgemäss möglichen Fehleranalyse. In der Fig. 1 sind aus Veranschaulichungsgründen keine Strahlquellen oder Beleuchtungseinrichtungen dargestellt. Diese Anordnungen sind jedoch gattungsgemässe Realisierungen und dem Fachmann bekannt, zudem können diese auch in einer für das in Fig. 9 dargestellten Beispiel eines Linearencoders analogen Weise realisiert werden.

In Fig. 2 erfolgt eine schematische Darstellung eines Codes für den Winkelencoder aus Fig. 1 und dessen Abbildung auf das Sensorpaar. Dargestellt werden die Musterelemente 4, deren Musterzentrum in diesem Fall mit der Drehachse zusammenfällt. Für die Anordnung mit dem Sensorpaar aus gegenüberliegenden Sensorarrays 1 kann ein Zentrum DZ definiert werden, das im Idealfall mit dem Musterzentrum und der Drehachse übereinstimmen soll, so dass keine Exzentrizitätsfehler auftreten. Bezüglich der Detektoranordnung können zudem eine x- und eine y-Achse als Bezugsgrössen definiert werden, bezüglich derer die Drehlagen bestimmt werden. In den Beispielen wird der auf dem Drehkörper angeordnete Code lediglich aus Veranschaulichungsgründen als Inkrementalcode mit einer äquidistanten Abfolge von gleichartigen Musterelementen 4 dargestellt. Das erfindungsgemässe Verfahren ist jedoch nicht hierauf beschränkt und kann grundsätzlich für alle Typen von Inkremental- oder Absolutcodes Verwendung finden.

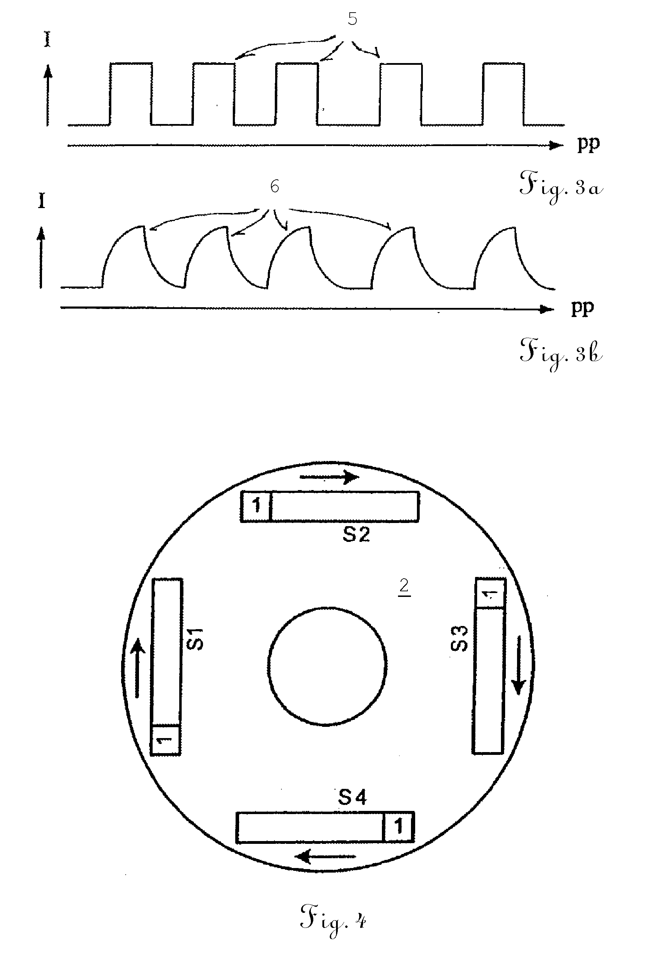

Gemäss Fig. 3a werden durch die Abbildung oder Projektion der Code-Elemente auf den Sensorarrays im Idealfall zur Bestimmung einer genauen Position Rechteck-Peaks 5 erzeugt und verwendet, deren Lage der effektiven Position von Code-Elementen, insbesondere einer Teilung bzw. eines Strichcodes, relativ zu dem jeweiligen Sensorarray entspricht. Der gemessene Rechteck-Peak 5 als Signalform wird nun zumindest durch einen Positionswert und gegebenenfalls durch eine Breite charakterisiert. Als Position eignet sich etwa die Mitte des Rechteck-Peaks 5.

Gemäss Fig. 3b können die von einem Sensorarray effektiv ausgelesenen Peaks 6 mit Fehlern behaftet sein. Die Fehler hängen von der Auslesegeschwindigkeit sowie der Ausleserichtung ab und führen zu verformten Peaks 6. Je nach Parametern, wie z.B. Intensität und Auslesegeschwindigkeit, erfolgt eine Deformation des idealen Rechtecksignals, wobei neben der Flankendeformation durch Sättigungseffekte auch die Lage des Scheitelwertes verschoben werden kann, so dass asymmetrische Peaks 6 mit in Ausleserichtung verschobenen Schwerpunkten resultieren. Die Lage eines Peaks 6, bzw. seines Schwerpunkts, kann beispielsweise dadurch bestimmt werden, dass alle Pixelwerte unter einem Schwellwert auf Null und alle über dem Schwellwert auf Eins gesetzt werden.

Die Verschiebung eines aus einem asymmetrischen Peak 6 abgeleiteten Rechteck-Peaks 5 gegenüber dem erwarteten Rechteck-Peak 5 hängt von der Asymmetrie und vom verwendeten Schwellwert ab.

Es hat sich gezeigt, dass nebst der Auslesegeschwindigkeit und Ausleserichtung auch andere Parameter, wie beispielsweise die Strahlungs- insbesondre Lichtintensität und die Temperatur, einen Einfluss auf die Verschiebung des ermittelten Schwerpunkts eines Peaks haben, wobei eine isolierte Quantifizierung und Beseitigung dieser Fehlereinflüsse einen hohen Aufwand bedeuten würde.

Fig. 4, 6 und 8 zeigen eine typische Sensorkonfiguration für Winkelencoder, wobei durch die verwendeten Sensorarrays S1, S2, S3, S4 und deren Anordnung beispielsweise Exzentrizitätsfehler bestimmt werden können. Gemäss Fig. 4, 6 und 8 sind mindestens zwei Sensorarrays, vorzugsweise aber vier Sensorarrays S1, S2, S3 und S4, Abschnitten von Strichcodes bzw. Kreisteilungen zugeordnet. Die Kodierung ist in der vorliegenden Ausführungsform als Kreisteilung auf einer Trägerscheibe als Drehkörper 2 angeordnet. Die Trägerscheibe ist relativ zu den Sensorarrays S1, S2, S3 und S4 um ihr Zentrum drehbar. Die Codierung ist im radialen Bereich bei den Sensorarrays S1, S2, S3 und S4 angeordnet aber nicht dargestellt. Die Umfangsbewegung des rotierenden Drehkörpers 2 gewährleistet relativ zu den Sensorarrays S1, S2, S3 und S4 eine Bewegungsrichtung des Codes im Wesentlichen in Längsrichtung der Sensorarrays S1, S2, S3 und S4.

Die Positionsbestimmung kann über eine beliebige Codierung also irgendein Muster, einen Absolutcode und/oder einen Inkrementcode erfolgen. Es versteht sich von selbst, dass bei linearen Systemen eine linear verlaufende Codierung auf einem linearen Träger eingesetzt wird.

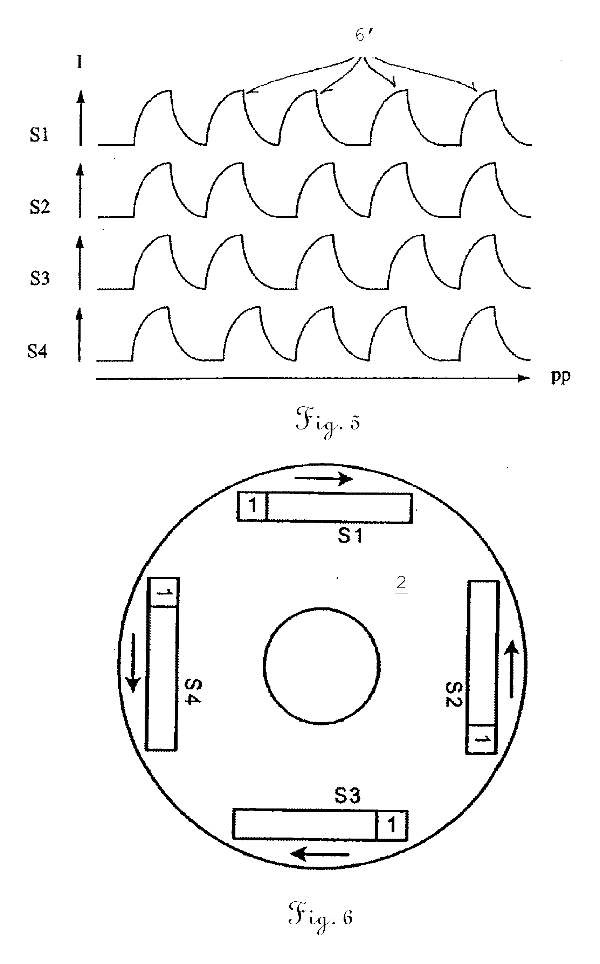

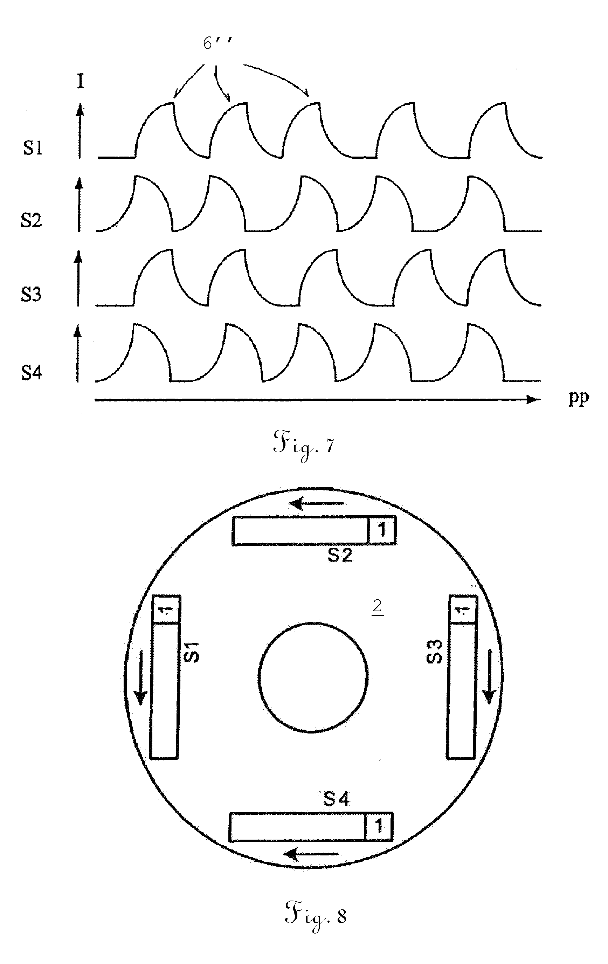

Gemäss Fig. 5 und 7 liefert jedes Sensorarray S1, S2, S3 und S4 der Fig. 4 bzw. 6 zu jedem Zeitpunkt einen Intensitätsverlauf, der jeweils ausgehend von einem ersten Pixel, hier mit der Zahl "1" veranschaulicht, in Ausleserichtung erfasst wird. Fig. 5 und 7 zeigen hierbei den Signalverlauf mit Verzerrungen, wie er beispielsweise für hohe Auslesefrequenzen auftritt. Werden die Sensorarrays S1, S2, S3 und S4 mit geringeren Frequenzen ausgelesen so nähert sich der Signalverlauf dem idealen Rechteckprofil an.

In Fig. 4 sind entlang der Umfangsrichtung alle Sensorarrays S1, S2, S3 und S4 aufweisende Sensorelemente in ihrer Ausleserichtung in einer ersten Ausführungsform gleichsinnig ausgerichtet oder geschaltet, d.h. diese werden in Drehrichtung gleichsinnig ausgelesen, wie dies im Stand der Technik realisiert ist. Dies bedeutet, dass das Auslesen der Pixel vom ersten Pixel her einheitlich in der gleichen oder der entgegengesetzten Richtung erfolgt, in der sich auch der Drehkörper 2 bewegt. In Fig. 6 und Fig. 8 wird diese einheitlich Ausrichtung aufgehoben und die Ausleserichtungen werden gegeneinander verschränkt, d.h. zumindest eines der Sensorarrays 1 wird in Bezug auf die durch die Bewegungsrichtung gegen die Ausleserichtung der übrigen Sensorarrays 1 ausgelesen. Insbesondere können jeweils Sensorpaare gegenläufig bzw. gegensinnig ausgelesen werden, so dass bei geradzahligen Anordnungen eine paarweise Kompensation folgt. Zu berücksichtigen ist hierbei, dass die ohne Bezug zur Bewegung des Drehkörpers 2 betrachtete Ausleserichtung durchaus gegenläufig sein kann, wohingegen unter Bezugnahme auf die Bewegung des Drehkörpers die Ausleserichtung gleichsinnig definiert ist. Dies zeigt sich beispielsweise in Fig. 4, in der die Sensorarrays S2 und S4 ohne Bezugnahme auf eine Rotation als gegensinnig ausgelesen zu betrachten wären. Berücksichtigt man jedoch die zu vermessende Position des Drehkörpers 2 und bezieht sich somit auf die eine Bewegungsrichtung definierende Drehung, so erfolgt das Auslesen in der Tat gleichsinnig.

In der Fig. 6 sind jeweils zwei Paare aus den Sensorarrays S1 und S2 sowie S3 und S4 in Bewegungsrichtung mit ihrer Ausleserichtung gegenläufig bzw. gegensinnig angeordnet. Damit werden die aneinandergrenzenden und gegeneinander gewinkelten Sensorpaare aus den Sensorarrays S1, S2 und S3, S4 in Umfangs-, d.h. Drehrichtung, vom ersten Pixel beginnend paarweise gegensinnig ausgelesen.

Aus den in Fig. 5 bzw. 7 dargestellten ausgelesenen Peaks 6' und 6'', bzw. den Schwerpunkten der ausgelesenen Peaks 6' und 6'', werden Positionswerte des Codes relativ zum entsprechenden Sensorarray bestimmt. Bei der Ermittlung einer genauen Position kann zuerst für die ausgelesenen Peaks 6' jedes Sensorarrays ein Positionswert bestimmt werden, welche Positionswerte dann zu einer genauen Position gemittelt werden oder aber es erfolgt eine Mittelung auf der Ebene der nicht hinsichtlich der Position aufgelösten Werte, so dass die Positionsbestimmung ausgehend von den Peak-Positionen der Sensorarrays auch ohne Bestimmung von Positionswerten für einzelne Sensorarrays durch direkte Aggregierung der Werte durchgeführt werden kann.

Gemäss Fig. 6 sind die Sensorarrays S1, S2, S3 und S4 bezüglich ihrer Ausleserichtung relativ zur Bewegungsrichtung des Codes, insbesondere einer Umfangsrichtung der Kreisteilung, paarweise gegensinnig geschaltet bzw. werden in dieser Richtung ausgelesen. Hierbei zeigt Fig. 7 die beim Auslesen der Pixel auftretenden Verschiebungen der Peak-Schwerpunkte von durch die Teilung durchtretenden Strahlungs- bzw. Lichtabschnitten bei den gegensinnig ausgelesenen Sensorarrays S1, S2, S3, S4 jeweils in entgegen gesetzter Richtungen der Achse pp. Entsprechend der Verschiebung der Peaks 6'' ist auch der aus den Peaks 6'' eines Sensorarrays S1, S2, S3, S4 abgeleitete Positionswert etwas verschoben. Bei der Mittelung von abgeleiteten Positionen über Paare von gegensinnig ausgelesenen Sensorarrays S1, S2, S3, S4 heben sich die Asymmetrien der Peaks 6'' und damit die entgegen gesetzten Verschiebungsfehler der einzelnen Sensorarrays S1, S2, S3, S4 im Wesentlichen auf. Eine solche Anordnung beseitigt sowohl in der Sensorebene liegende laterale x/y-Driften als auch Winkeldriften, d.h. driftbedingte Veränderungen der gemessenen Drehlage.

Beim Vergleichen der Fig. 5 und 7 wird klar, dass die gleich ausgerichteten Peakverschiebungen alle im Wesentlichen die gleiche Verschiebung zeigen. Bei den abwechslungsweise verschiedenen Ausrichtungen der Peaks 6'' in Fig. 7 heben sich die Fehler paarweise auf. Daraus ist die einfache Möglichkeit zum Korrigieren von Positionswerten klar ersichtlich.

Wenn nun die Sensorarrays mit verschieden Paarungen bzw. Ausleseanordnungen ausgelesen werden, ist es möglich, einmal den fehlerbehafteten Zustand und einmal den fehlerkompensierten Zustand zu analysieren und aus einer Differenzbetrachtung Rückschlüsse auf das Systemverhalten oder das Verhalten der Komponenten, z.B. deren thermisches Driftverhalten zu ziehen. Dies kann beispielsweise durch schaltbare Ausleserichtungen oder auch die doppelte Anzahl von Sensorarrays mit fixer Ausleserichtung realisiert werden, wobei dann in letzterem Fall immer nur das Sensorarray mit der jeweils gewünschte Ausleserichtung verwendet wird. Die in Fig. 6 gezeigte Anordnung würde dann insgesamt vier Doppelsensorarrays bzw. acht jeweils zu zweit gegenläufig geschaltete und selektiv auslesbare Sensorarrays aufweisen. Werden durch die Realisierung der Auslesezustände gem. Fig. 4 auf der einen und Fig. 6 auf der anderen Seite erzeugte Signale aufgenommen, so resultieren die Intensitätsverteilungen gemäss Fig. 5 und gemäss Fig. 7. Diese unterscheiden sich in den die Positionen repräsentierenden Werten bzw. den ermittelten Positionen etwas voneinander. Der Unterschied entspricht dabei einem Fehler, der den aktuellen Parametern (Auslesegeschwindigkeit, Lichtintensität, Temperatur) zugeordnet werden kann. Wenn nun beispielsweise lediglich ein Parameterwert schrittweise verstellt und der dazugehörende Fehler bestimmt wird, können diese Fehler auch für Eich- oder Kalibrierzwecke verwendet werden. Dies ist insbesondere dann realisierbar, wenn die Sensorarrays unterschiedlich gruppiert bzw. wahlfrei ausgelesen werden können. Hierbei können durch selektives Schalten von einzelnen oder mehreren Arrays in Gegenrichtung zur Ausleserichtung der übrigen, ggf. verbunden mit lokal variierten Intensitäten oder anderen Parametern, unterschiedlichste Relationen erzeugt werden, welche auch die Bestimmung des Systems mit komplexeren Verfahren ermöglichen, z.B. mittel statistischer Schätzverfahren, bspw. Maximum-Likelihood-Schätzern. Die Variation der Ausleserichtung erlaubt somit die Erzeugung einer Zahl von definierten Meßzuständen durch Umschalten der Ausleserichtung einzelner oder mehrerer Arrays bzw. deren paarweiser Gruppierung. Dabei ist die erfindungsgemäße Lösung nicht auf Winkelencoder oder solche mit vier Sensoren beschränkt. Erfindungsgemäss können auch Meßvorrichtungen mit anderen geraden Zahlen von Sensoren, z.B. mit sechs oder acht Detektoren, realisiert werden. Auch ist es bei entsprechender Kalibrierung oder Gewichtung möglich, ungeradzahlige Anordnungen zu verwenden, z.B. wenn bei drei Detektoren der Beitrag des einen gegenläufig geschalteten Detektors doppelt berücksichtigt bzw. entsprechend verstärkt wird. Somit können auch beispielsweise Anordnungen mit drei, fünf oder sieben Detektoren erfindungsgemäß ausgewertet werden.

Fig. 8 zeigt eine Alternative zur in Fig. 6 realisierten Ausleserelation mit einer zweiten erfindungsgemässen Ausführungsform von vier paarweise gegensinnig angeordneten Sensorarrays S1, S2, S3 und S4. Hierbei sind die jeweils gegenüberliegenden Sensorarrays S1 und S3 sowie S2 und S4 als Sensorpaare in Bewegungsrichtung gegenläufig geschaltet. Auch hier entsteht die Relation, dass zwei der vier Sensorarrays S1, S2, S3, S4 in Bewegungsrichtung und zwei entgegengesetzt zur Bewegungsrichtung ausgelesen werden, wobei der zur Fig. 6 korrespondierende Kompensationseffekt in der Signalauswertung resultiert. Diese Anordnung beseitigt - ähnlich wie bei der Anordnung der Fig. 6 - die Winkeldrift, beseitigt aber im Gegensatz zu dieser keine x/y-Driften. Fig. 9 zeigt eine schematische Darstellung eines erfindungsgemässen Linearencoders mit zwei Sensorarrays S1' und S2' eines Sensorelementes, auf welche die gleichen Codeelemente eines linearen Codeträgers 8 abgebildet werden. Neben der Verwendung in flachen Geometrien, z.B. bei der Vermessung einer linearen Verschiebung, kann dieser Aufbau auch bei der Messung von Drehlagen zylindrischer Körper bzw. Zylinderteilungen verwendet werden. Eine Strahlungs- oder Lichtquelle erzeugt auf den beiden Sensorarrays S1' und S2' eine Projektion der Code-Elemente, wobei diese Sensorarrays S1' und S2' ein Sensorpaar bilden, das in Bewegungsrichtung des linearen Codeträgers 8 gegensinnig bzw. gegenläufig ausgelesen wird. Damit kann die erfindungsgemäße Lösung auch auf Linearsysteme angewendet werden, wobei in dem gezeigten Beispiel die gleiche Stelle des Codes auf zwei Detektoren abgebildet wird, jedoch eine gegenläufige Auslesung erfolgt. Diese Anordnung mit der Erfassung derselben Code-Elemente durch zwei Sensorarrays kann dabei auch für die in den Fig. 6 und 8 gezeigten Anordnungen realisiert werden.

Naturgemäß sind ebenso auch erfindungsgemäße Ausführungsformen mit Abbildung unterschiedlicher Codestellen auf zwei nacheinander angeordnete Sensorarrays oder mit zweidimensionalen Verschiebungen und entsprechenden Codesysteme für lineare Encoder realisierbar. Ebenso kann dieses Prinzips auch mit nur einem Sensorarray realisiert werden, dessen Werte unter Erhaltung der durch die Abbildung verkörperten Information nacheinander oder gleichzeitig in zwei unterschiedlichen Richtungen ausgelesen werden. Statt des Sensorpaares aus den zwei Sensorarrays S1' und S2' mit jeweils einer spezifischen Orientierung und Ausleserichtung wird hier somit ein Sensorarray mit zwei gegensinnigen Ausleserichtungen verwendet. Wie auch bei den anderen Ausführungsbeispielen kann hier grundsätzlich auch eine Kombination beider Prinzipien verwendet werden, d.h. es können sowohl Sensorpaare mit gegenläufigen Ausleserichtungen als auch Einzelsensorarrays mit zwei Ausleserichtungen in einer gemeinsamen Anordnung kombiniert werden.

Fig.10 zeigt die zwei Sensorarrays mit paralleler Anordnung für den Linearencoder aus Fig. 9, wobei diese Sensorarrays als erstes Ausführungsbeispiel eines erfindungsgemässen Sensorelements auf einem gemeinsamen Trägerchip angeordnet sind, was auch für das Ausführungsbeispiel in Fig.6 und Fig.8 realisiert werden kann, wenn zwei Sensorarrays in einem Sensorelement zusammengefasst werden. Beide Sensorarrays sind als Lineararrays mit einer Abfolge von N Pixeln 1a-Na bzw. 1b-Nb ausgebildet, wobei ein Linearray eine aufeinanderfolgende Reihung von Pixeln darstellt, die nicht notwendigerweise in gerader Form erfolgen muss. Vielmehr können auch Abfolgen von Pixeln auf einer gekrümmten Linie als Linearray verwendet werden, solange diese seriell auslesbar sind. Der Begriff des Linearrays umfasst hier also auch Kreissegmente oder kreisähnlich angeordnete Abfolgen von Bildpunkten. In diesem Beispiel verfügen beide Lineararrays jeweils über eigene Datenleitungen als Signalausgänge zum Auslesen der Pixel. Die Datenleitungen sind hierbei jeweils an den entgegengesetzten Enden der beiden Linearrays angeordnet, so dass diese parallel, aber in entgegengesetzter Richtung, d.h. gegenläufig oder gegensinnig, ausgelesen werden. Hierbei ist der Abstand der beiden Linearrays so gewählt, dass dieselben Codeelemente jeweils von Pixeln beider Lineararrays erfasst werden. Beide Lineararrays können nahe beieinander liegend, d.h. mit nur geringem Abstand, angeordnet werden, so dass der gemeinsam zu erfassende Code auf die beiden Lineararrays möglichst identisch projiziert wird. So kann der Abstand beispielsweise kleiner als die Breite der Linearrays oder zumindest im Bereich von deren Breite bzw. dem Doppelten oder Dreifachen der Breite gehalten werden. Die zwei Signalausgänge erlauben hohe Auslesegeschwindigkeiten, erhöhen dabei aber auch die Komplexität, da zwei Signalverarbeitungen gewährleistet werden müssen.

Alternativ können erfindungsgemäss auch Zeilen oder Spalten eines Flachensensors bzw. einer matrixartigen Anordnung von Bildpunkten in einer analogen Weise gegenläufig ausgelesen werden.

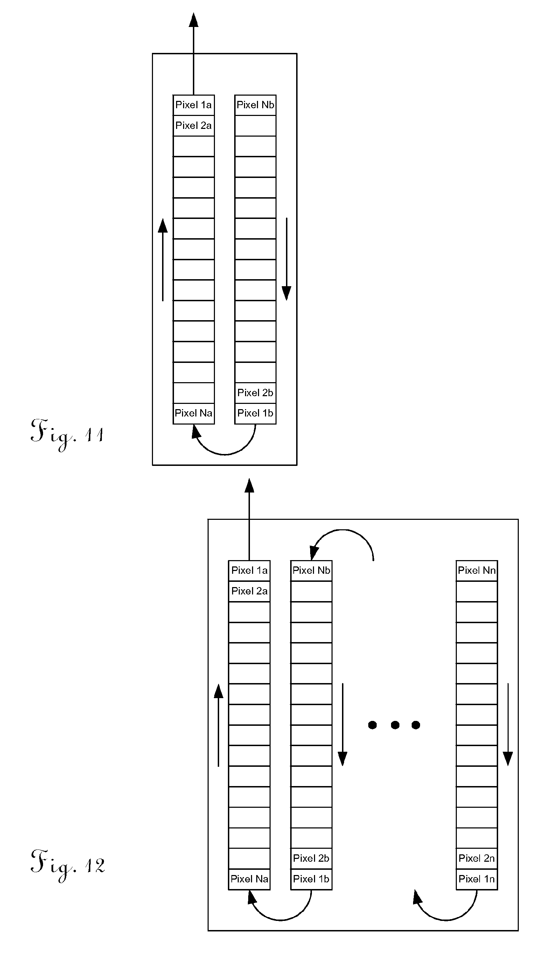

Ein zweites Ausführungsbeispiel eines erfindungsgemässen Sensorelements mit paralleler Anordnung der Sensorarrays und gemeinsamer serieller Auslesung wird in Fig. 11 dargestellt. In diesem Ausführungsbeispiel werden die beiden Sensorarrays ebenfalls vorteilhafterweise auf einem gemeinsamen Trägerchip angeordnet, wobei sie so seriell verschaltet sind, dass sie mit entgegengesetzten Ausleserichtungen in einem gemeinsamen Auslesevorgang als ein einziges Sensorarray ausgelesen werden. Hierbei die sind die zwei Sensorarrays wie auch in der Anordnung gem.
Fig. 10 mit ihren Längsachsen parallel zueinander orientiert. Damit entspricht diese Anordnung einem in zwei Teilbereichen aufgebrochenen Sensorarray, wobei die Teilbereiche hintereinander geschaltet sind. Durch den gemeinsamen Auslesevorgang mit nur einem Signalausgang bzw. nur einer Datenleitung wird zwar die Auslesegeschwindigkeit gegenüber der Anordnung aus Fig. 10 verringert, allerdings kann die Auswertung mit nur einer gemeinsamen Signalverarbeitung erfolgen, so dass ein geringerer Aufwand erforderlich ist. Zudem wirken sich Fehler oder Einflüsse auf beide Zeilen in gemeinsamer Weise aus. So können insbesondere DriftEffekte oder Helligkeitsabhängigkeiten bzw. lokale Schwankungen aufgrund der gemeinsamen Ausgangsstufe kompensiert werden. Die in Zusammenhang mit der Fig. 10 dargestellten Vorteile eines geringen Abstands der Sensorarrays gilt auch für die parallelen Anordnungen mit seriellen Auslesevorgängen.

Das Sensorelement aus Fig. 11 kann auch durch Ergänzung weiterer Sensorarrays erweitert werden, so dass sich als drittes Ausführungsbeispiel das in Fig.12 dargestellte Sensorelement ergibt. In diesem Beispiel werden n Sensorarrays parallel angeordnet und hintereinander geschaltet bzw. seriell verbunden, wobei die Ausleserichtungen alternieren, d.h. von Sensorarray zu Sensorarray in ihrer Richtung gegenüber der Längsachse des ersten Sensorarrays umkehren. In diesem Beispiel wird n gerade gewählt, so dass eine Folge von paarweise gegenläufig ausgelesenen Linearrays realisiert wird.

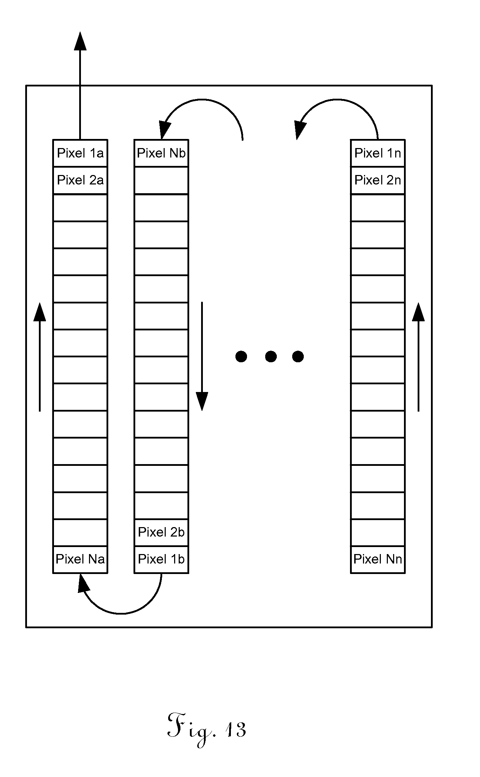

Grundsätzlich kann eine solche Anordnung jedoch auch mit einer ungeraden Anzahl n von Sensorarrays ausgebildet werden, so dass sich das in Fig.13 dargestellte vierte Ausführungsbeispiel eines erfindungsgemässen Sensorelements ergibt. Das letzte, aufgrund der ungeraden Zahl nicht mit einem anderen Sensorarray gepaarte Array kann beispielsweise in der Auswertung mit einer Gewichtsfunktion versehen oder zusammen mit einem gleichsinnig ausgelesen anderen Sensorarray gemittelt und dann mit einem weiteren gegensinnig ausgelesen Sensorarray gepaart werden. Es resultiert somit ein Sensorpaar als 2+1-Anordnung mit insgesamt drei Sensorarrays, von denen zwei gleichsinnig ausgelesen, nur mit einer Gewichtsfunktion berücksichtigt und dann mit dem Ergebnis des dritten, gegensinnig ausgelesen Sensorarrays aggregiert werden, so dass eine Paarung von zwei zu einem Array kombinierten Sensorarrays mit einem dritten erfolgt. Solche Anordnungen können bspw. zur bestmöglichen Ausnutzung von am Rande schlecht ausgeleuchteten Codeprojektionen verwendet werden. So können beispielsweise bei n = 3 Sensorarrays und einer am Rand der Sensorelement abnehmenden Ausleuchtung die beiden äusseren Sensorarrays entsprechend der schlechteren Ausleuchtung gewichtet und mit dem in der Mitte der symmetrischen Anordnung liegenden Sensorarray verglichen bzw. aggregiert werden. Je nach Anwendung können bei asymmetrischen Verhältnissen die beiden Flankenarrays jedoch auch unterschiedlich gewichtet werden.

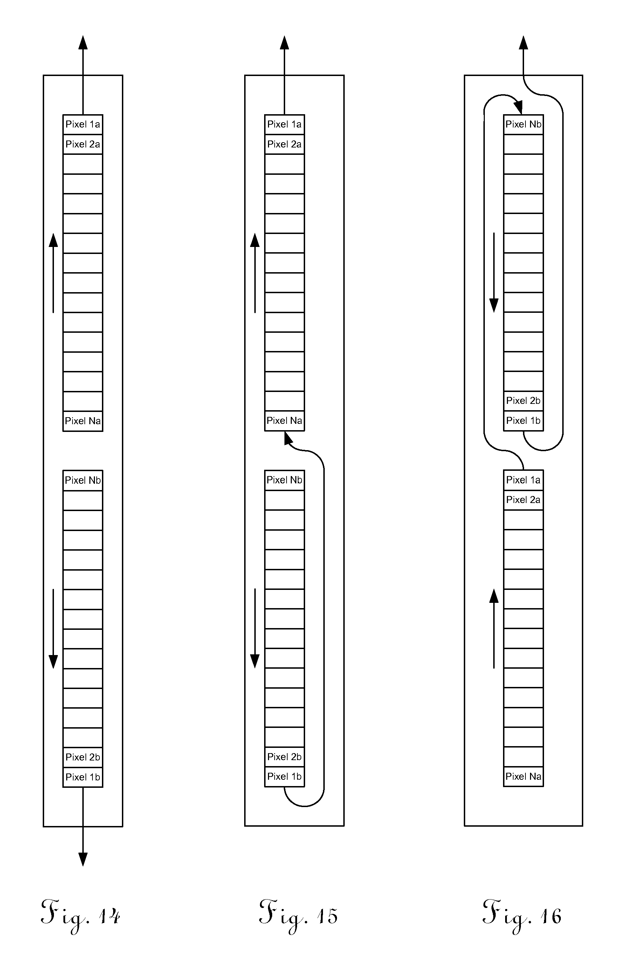

Neben Sensorelementen mit nebeneinander liegenden Sensorarrays und paralleler Ausrichtung deren Längsachsen ist jedoch auch eine nacheinander liegende Anordnung möglich, so dass die Sensorarrays in ihrer Längsachse aufeinander folgen und somit alle Bildpunkte oder Pixel in einer Linie angeordnet sind. Ein Beispiel für ein solches Sensorelement wird in Fig.14 als fünftes Ausführungsbeispiel eines erfindungsgemässen Sensorelements mit einer gemeinsamen Längsachse der Sensorarrays gezeigt. In diesem Ausführungsbeispiel werden in zu Fig. 10 analoger Weise beide Sensorarrays separat ausgelesen und verfügen daher über eigene Datenleitungen und Signalausgänge. Eine solche lineare Anordnung kann beispielsweise zur Anwendung kommen, wenn ein in Längsrichtung gleichförmiger Code, z.B. einem einfachen Inkrementalcode, in dieser Richtung verschoben wird, so dass beide Sensorarrays bei geeigneter Projektion des Codes und einem Abstand der Sensorarrays von einem Vielfachen der Codeperiode die gleiche Abbildung detektieren.

Eine serielle Verschaltung mit gemeinsamem Auslesevorgang der beiden Sensorarrays zeigen Fig.15 und Fig. 16 mit einem sechsten und siebten Ausführungsbeispiel eines erfindungsgemässen Sensorelements, wobei in Fig. 15 die Ausleserichtungen der beiden Sensorarrays aufeinander zu und in Fig. 16 voneinander weg verlaufen bzw. orientiert sind.

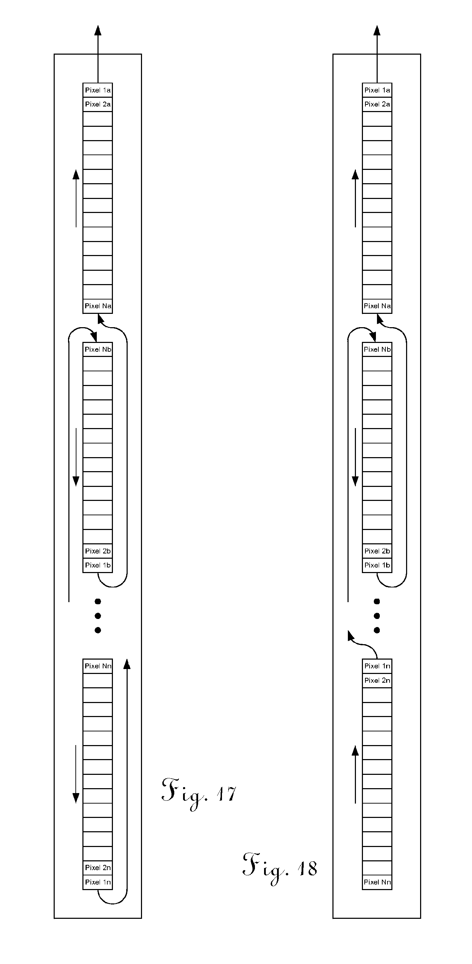

Auch die in Längsachse aufeinander folgende Anordnung der Sensorarrays kann mit grösseren Zahlen von n Sensorarrays realisiert werden, wobei n wiederum gerade oder ungerade sein kann. Beispiele hierfür werden in Fig.17 und Fig. 18 für ein achtes und neuntes Ausführungsbeispiel eines erfindungsgemässen Sensorelements gezeigt.

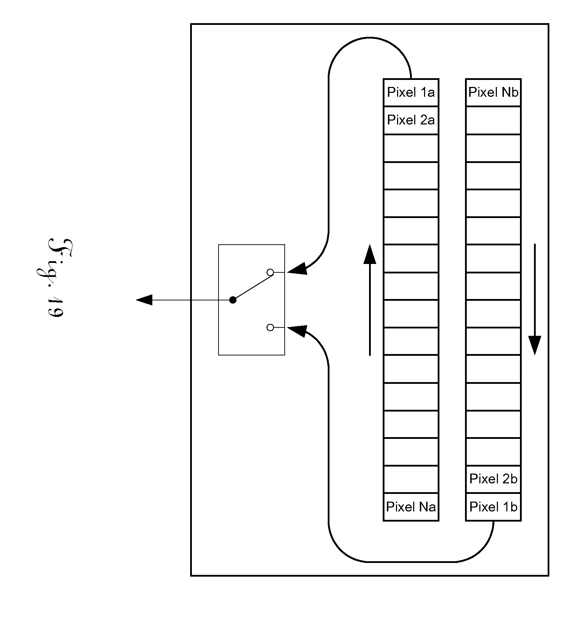

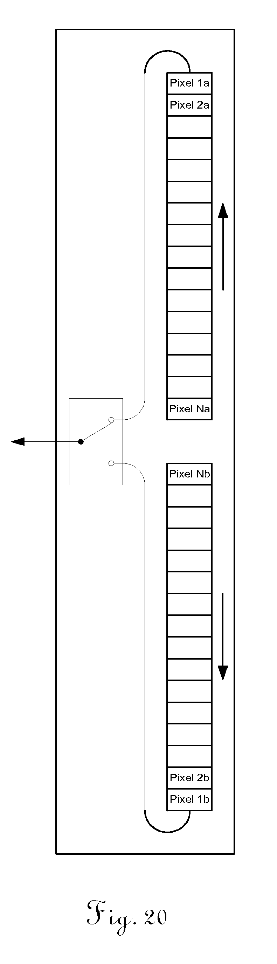

Fig.19 und Fig.20 zeigen ein zehntes und elftes Ausführungsbeispiel eines erfindungsgemässen Sensorelements mit einem Multiplexer, wobei wiederum in Fig.19 eine parallelen und in Fig.20 eine gemeinsame Längsachse der Sensorarrays realisiert wird.

Grundsätzlich können erfindungsgemäss auch matrixartige Anordnungen realisiert werden, bei denen Sensorarrays sowohl neben- als auch nacheinander angeordnet sind, was beispielsweise die Bestimmung von Bewegungen bzw. Verschiebungen in zwei Achsen erlaubt. Hierfür können ebenso Flächenarrays verwendet werden, wenn Zeilen und Spalten in entsprechender Weise ausgelesen werden können.

## Patentansprüche

1. Verfahren zum Bestimmen einer Position eines Codes auf einem bewegbaren Träger (2,8) relativ zu mindestens einem Sensorelement, welches mindestens ein Sensorarray (1,S1,S1',S2,S2',S3,S4) aufweist, insbesondere ein CMOS-Sensorarray, wobei
• der Träger (2,8) gegenüber dem Sensorelement in einer Bewegungsrichtung bewegbar ist,
• das mindestens eine Sensorarray (1,S1,S1',S2,S2',S3,S4) des Sensorelements die Lage von durch Strahlung unterscheidbar abgebildeten Code-Elementen (4) im Bereich des Sensorarrays (1,S1,S1',S2,S2',S3,S4) ermittelt, indem die erfassten Werte des Sensorarrays (1,S1,S1',S2,S2',S3,S4) aus dem Sensorelement ausgelesen werden und
• aus den Werten durch Mittelung die Position bestimmt wird,
**dadurch gekennzeichnet, dass** entweder das wenigstens eine Sensorarray (1,S1,S1',S2,S2',S3,S4) zweimal und mit gegensinnigen Ausleserichtungen ausgelesen wird und/oder ein Sensorpaar aus zwei Sensorarrays (1,S1,S1',S2,S2',S3,S4) mit jeweils arrayspezifischen Ausleserichtungen relativ zur Bewegungsrichtung des Trägers paarweise gegensinnig ausgelesen werden und/oder.

2. Verfahren nach Anspruch 1,
**dadurch gekennzeichnet, dass**
• zwei Sensorpaare mit gegensinnig ausgelesenen Sensorarrays (1,S1,S2,S3,S4) verwendet werden,
• der Code, vorzugsweise als Kreisteilung, auf dem Träger (2) in Umfangsrichtung verläuft und
• die gegensinnig ausgelesenen Sensorarrays (1,S1,S2,S3,S4) eines Sensorpaares im Wesentlichen einander diametral gegenüberliegend oder zueinander gewinkelt angeordnet sind.

3. Verfahren nach einem der vorangehenden Ansprüche,
**dadurch gekennzeichnet, dass** die Code-Elemente (4) von dem wenigstens einen Sensorarray (1,S1,S1',S2,S2',S3,S4) in der Form von Peaks (6,6',6'') erfasst werden, wobei zur Ermittlung einer Peak-Lage mindestens ein Schwellwert verwendet wird.

4. Verfahren nach Anspruch 3,
**dadurch gekennzeichnet, dass** beim Ableiten von Positionswerten ausgehend von den Peak-Lagen der mit dem wenigstens einen Sensorarray (1,S1,S1',S2,S2',S3,S4) erfassten Peaks (6,6',6''), eine von mindestens einem Parameter, wie
- einer Auslesefrequenz,
- einem Schwellwert,
- einer Strahlungsintensität oder
- einer Temperatur, abhängige Korrektur durchgeführt wird, insbesondere eine von einem Parameter abhängige Positionsdifferenz zum aus den Peak-Lagen abgeleiteten Positionswert addiert wird.

5. Verfahren nach Anspruch 3 oder 4,
**dadurch gekennzeichnet, dass** in mindestens einem Eichschritt oder mindestens einem Kontrollschritt zumindest ein Sensorpaar sowohl gegensinnig als auch gleichsinnig ausgelesen wird und aus der Differenz der beiden dabei bestimmten Positionswerte ein Eichparameter und/oder ein Hinweis auf eine Störung abgeleitet wird.

6. Verfahren nach einem der vorangehenden Ansprüche,
**dadurch gekennzeichnet, dass** das wenigstens eine Sensorarray (1,S1,S1',S2,S2',S3,S4) mit einer Frequenz von mehr als 1 MHz, insbesondere von mehr als 10 MHz, ausgelesen werden.

7. Vorrichtung zum Bestimmen von Positionen eines Codes auf einem bewegbaren Träger (2,8) relativ zu mindestens einem Sensorelement, welches wenigstens ein Sensorarray (1,S1,S1',S2,S2',S3,S4) aufweist, insbesondere ein CMOS-Sensorarray,
wobei
• der Träger (2,8) bezüglich des Sensorelements in einer Bewegungsrichtung bewegbar ist,
• das wenigstens eine Sensorarray (1,S1,S1',S2,S2',S3,S4) die Lage von durch Strahlung unterscheidbar abgebildeten Code-Elementen (4) im Bereich des Sensorelements ermittelt, indem die erfassten Werte aus dem wenigstens einen Sensorelement ausgelesen werden und
• aus den Werten durch Mittelung die Position bestimmt wird,
**dadurch gekennzeichnet, dass**
- das wenigstens eine Sensorarray (1,S1,S1',S2,S2',S3,S4) so mit einer Auswerteschaltung verbunden ist, dass das Sensorarray zweimal mit gegensinnigen Ausleserichtungen auslesbar ist und/oder
- ein Sensorpaar aus zwei Sensorarrays (1,S1,S1',S2,S2',S3,S4) mit jeweils einer arrayspezifischen Ausleserichtung relativ zur Bewegungsrichtung des Trägers (2,8) paarweise so ausgerichtet und mit einer Auswerteeinrichtung verbunden ist, dass die zwei Sensorarrays (1,S1,S1',S2,S2',S3,S4) eines Sensorpaares relativ zur Bewegungsrichtung des Trägers (2,8) mit gegensinnigen Ausleserichtungen auslesbar sind.

8. Vorrichtung nach Anspruch 7,
**dadurch gekennzeichnet, dass**
• zwei Sensorpaare mit gegensinnig ausgelesenen Sensorarrays (1,S1,S2,S3,S4) verwendet werden,
• der Code, vorzugsweise als Kreisteilung, auf dem Träger (2) in Umfangsrichtung verläuft und
• die gegensinnig ausgelesenen Sensorarrays (1,S1,S2,S3,S4) eines Sensorpaares im Wesentlichen einander diametral gegenüberliegend oder zueinander gewinkelt angeordnet sind.

9. Vorrichtung nach Anspruch 7 oder 8,
**dadurch gekennzeichnet, dass** eine Eich- oder eine Kontrollvorrichtung vorgesehen ist, die mindestens einem Eichschritt oder mindestens einen Kontrollschritt durchführbar macht, wobei zumindest ein Sensorpaar sowohl gegenläufig als auch gleichläufig auslesbar ist und aus der Differenz der beiden dabei bestimmten Positionswerte ein Eichparameter und/oder ein Hinweis auf eine Störung ableitbar ist.

10. Vorrichtung nach einem der Ansprüche 7 bis 9,
**dadurch gekennzeichnet, dass** die arrayspezifischen Ausleserichtungen der Sensorarrays eines Sensorpaares veränderbar, insbesondere frei schaltbar sind.

11. Vorrichtung nach einem der Ansprüche 7 bis 10,
**dadurch gekennzeichnet, dass** das wenigstens eine Sensorarray (1,S1,S1',S2,S2',S3,S4) mit einer Frequenz von mehr als 1 MHz, insbesondere von mehr als 10 MHz, auslesbar ist.

12. Vorrichtung nach einem der Ansprüche 7 bis 11,
**dadurch gekennzeichnet, dass** beide Sensorarrays (S1',S2') eines Sensorpaares die gleichen Code-Elemente (4) erfassen.

13. Sensorelement mit wenigstens zwei Sensorarrays, insbesondere auf einem gemeinsamen Chip, zur Durchführung des Verfahrens nach einem der Ansprüche 1 bis 11,
**dadurch gekennzeichnet, dass** die wenigstens zwei Sensorarrays so seriell verschaltet sind, dass sie
- mit entgegengesetzten Ausleserichtungen, insbesondere mit alternierenden Ausleserichtungen und
- in einem gemeinsamen Auslesevorgang als ein einziges Sensorarray ausgelesen werden, insbesondere durch aufeinanderfolgendes Auslesen unter Verwendung eines Multiplexers.

14. Sensorelement nach Anspruch 13,
**dadurch gekennzeichnet, dass** die wenigstens zwei Sensorarrays mit ihren Längsachsen parallel zueinander orientiert oder mit ihren Längsachsen in einer gemeinsamen Achse liegend angeordnet sind.

15. Sensorelement mit wenigstens zwei Sensorarrays, insbesondere auf einem gemeinsamen Chip, zur Durchführung des Verfahrens nach einem der Ansprüche 1 bis 11,
**dadurch gekennzeichnet, dass** die wenigstens zwei Sensorarrays jeweils über einen Signalausgang verfügen und die wenigstens zwei Sensorarrays mit ihren Längsachsen parallel zueinander orientiert sind, wobei der Abstand der Sensorarrays kleiner als das Dreifache ihrer Breite ist.
